# EUROPEAN PATENT SPECIFICATION

(11) **EP 4 155 502 B1**
(45) Date of publication and mention of the grant of the patent: **16.09.2026**
(21) Application number: 21807977.0
(22) Date of filing: 20.05.2021
(51) Int. Cl.: E21B 17/01, E21B 19/00, E21B 17/08

(54) **SUPPORT FOR RISERS AND METHOD FOR COUPLING AND UNCOUPLING**
TRÄGER FÜR STEIGROHRE UND VERFAHREN ZUM KUPPELN UND ENTKUPPELN
SUPPORT POUR RISERS ET PROCÉDÉ D'ACCOUPLEMENT ET DE DÉSACCOUPLEMENT

(30) Priority: 21.05.2020 BR 102020010231
(43) Date of publication of application: 29.03.2023
(73) Proprietor: PETRÓLEO BRASILEIRO S.A. - PETROBRAS, 20031912 Rio de Janeiro (BR)
(72) Inventor: VIOLANTE FERREIRA, Claudio, 20510-150 Rio de Janeiro (BR); PINHO DOS REIS, Bruno, 22620-311 Rio de Janeiro (BR); BARROSO DE MELLO, Flavio, 22230-060 Rio de Janeiro (BR)
(74) Representative: Clarke, Modet y Cía., S.L.
(86) International application number: PCT/BR2021/050217
(87) International publication number: WO 2021/232131

(56) References cited:
- WO-A1-2017/034409
- WO-A1-2019/232605
- WO-A1-2020/070476
- WO-A1-2021/223000
- DE-A1- 2 841 818
- US-A- 5 947 642
- US-A1- 2001 031 174
- US-A1- 2001 031 174
- US-A1- 2003 206 773
- US-A1- 2003 206 773
- US-A1- 2018 087 328

## Description

### Field of the Invention

The present invention addresses to a rigid or flexible riser interconnection component to be used in a pipe support and top termination of the riser with modified geometry, applied in the oil extraction/exploration field, mainly in floating production and storage units (FPSO: Floating Production Storage and Offloading), with the primary function of supporting rigid risers.

### Description of the State of the Art

The possibility of serial manufacturing of FPSO hulls for the pre-salt pole (replicants) emphasized the need to make the support systems of the risers and production plants suitable to current designs adapted to a future reality. The generalization of the structural and operational context, in such a way as to allow that a Stationary Production Unit (SPU) could be manufactured even before the complete definition of the bottom arrangement of a production field, led to the development of a type of pipe support called Multifunction Bell Mouth (MFBM).

As for the types of risers, it is noted that the flexible riser is manufactured using superimposed layers of interlocking steel profiles, interspersed with layers of elastomeric materials, so that such conformation provides to the riser a relative flexibility compared to those in the manufacture of which rigid metallic pipes are used.

Meanwhile, the rigid riser is manufactured in rigid steel pipes, which in the interconnection between the production line and the Stationary Production Unit (SPU) assumes the conformation of a free catenary. Such risers can be supported directly on the Buoy Supporting Riser (BSR), called Steel Catenary Riser (SCR) or SCR-type risers, which use carbon steel pipes internally coated with a corrosion-resistant metallic liner.

The basic concept established for this new riser support device was that it should have the versatility to allow the use of flexible or rigid risers with some variation in their internal diameters, and that the interconnection could be carried out by port or starboard. The interface of the MFBM with the top termination of the riser depends on the technology adopted (rigid or flexible riser), with rigid risers being locked from the top and flexible risers from the bottom.

In the case of supporting flexible risers, the bend stiffener locking is performed identically to the bell mouth of the BSN300 series (US 005947642A), with the bend stiffener helmet locked by dogs and the riser tension anchored by the hang-off on the upper balcony of the FPSO.

In the case of rigid riser support, a new Top Termination of the Riser (TTR) concept was developed. The top termination of the riser has already been named in several different ways, such as "Hang-off adapter", used in the FPSO Cidade Ilhabela or as "Shank" by the applicant during a design of a multifunction bell mouth, in which the termination of the riser contains a Flexjoint (Flexible Joint) or Stressjoint in its lower part and the riser tension is anchored in the upper cone of the MFBM, this force being transmitted by slips that, in the initial development stage of the MFBM concept, would be installed by shallow diving.

The applicant's first experience with the support of rigid risers in multifunction bell mouths occurred with the interconnection in the FPSO Cidade de Ilhabela. Although this SPU does not have multifunction bell mouths, it used a pipe support with the same profile as a MFBM.

During the detailing of the hang-off adapter for the FPSO Cidade de Ilhabela, some complications were observed for the design that were not identified during the conceptual phase of development of the MFBM. The first prohibitive issue, requiring modification of the invention, was the finding that, for safety reasons, the diver could not install the slips, as his hand would be positioned between the MFBM and the riser stressed by the pull-in cable; such a situation is considered to be an unacceptable risk.

The solution found for this problem was the development of hinged slips by the charterer of the FPSO Cidade de Ilhabela (SBM - WO2017/034409 A1). However, this solution cannot be effectively applied to replicant FPSOs, as this device, in addition to being protected by an SBM patent, has dimensions that are incompatible with the replicant risers support balcony, which has a very restricted space for installing the MFBM.

Another important point, observed during the interconnection of rigid risers to the FPSO Cidade de Ilhabela, was that the compensator gap system, which corresponds to the "locking ring" in the original MFBM concept, despite being capable of side locking the hang-off adapter, thus allowing transmission of the shear force coming from the riser, does not guarantee complete suppression of riser installation misalignment.

By analyzing all the restrictions observed during the detailing of the hang-off adapter for the FPSO Cidade de Ilhabela, the applicant developed a new termination concept. To this end, the support slips were considered as integral elements of the hang-off adapter (HOA-BR), thus avoiding the use of diving for its installation. A lower locking slip system was also planned, replacing the "locking ring" of the original concept.

Although considered a viable solution, the HOA-BR concept was discontinued because it had too many moving parts and would require a lot of detailed engineering, such as, for example, defining the hydraulic system to drive the upper slips. Based on the disclosure above, there was identified the need of adapting the design of the pipe support device to make this equipment more conducive to pull-in operations of rigid risers.

Document PI0902469B1 discloses a multi-angle support system for connecting a riser on the flank of oil production units, which comprises at least one support capable of fixing a riser to the side of a stationary production unit (SPU), and more especially in FPSOs, at a determined angle of arrival, and also offer the possibility of alternative combinations of arrangements that make possible having a variation of angles of arrival of the flexible or rigid riser, in any setting situation that may arise during the lifetime of a SPU. The document differs from the present invention in that it does not show significant changes in the pipe support and does not disclose geometric modifications in the top termination of the riser that simplify the equipment.

Document SG10201601701A1 discloses an apparatus for coupling a riser to a flowline, especially when coupled to the side or to a tower of a floating storage or production vessel (FPSO). In particular, the present invention concerns a bell mouth that can be used for various types of risers. The document does not make reference to the geometric modifications in the top termination of the riser nor to the rigid riser support mechanism being an integral part of the upper cone.

Document WO2017034409A1 discloses a superior locking system for a riser in support of floating platforms (FPSO). The riser pipe is inserted into the pipe support and mounted on a suspended pipe support. The upper locking system includes a plurality of hinged slips arranged where each hinged slip of the upper locking system is rotatably movable from an open position to a closed position. The hinged slips are at the Top Termination of the Riser; however, in the present invention, the hinged slips are an integral part of the upper cone of the bell mouth, thus eliminating the need of installing slips by shallow diving.

Document US20030206773A1, which is considered as being the disclosure closest to that of the current invention, discloses a system for guiding the risers that comprises a plurality of risers guides.

Document WO2020070476A1 discloses a plurality of features related to the connection of two tubular members but has nothing to do with the support for risers of the invention.

Documents US20180087328A1, WO2021223000A1 and US 20010031174A1 are documents of the state of the art that do not anticipate the support for risers of the invention.

The present invention addresses to a rigid riser support with different features that provide advantages over what is disclosed by documents of the state of the art.

### Brief Description of the Invention

The present invention addresses to a riser interconnection component to be used in a pipe support type device, focused on the replacement/innovation of the upper part, this component with the primary function of supporting the rigid riser. Although the present invention is directed to the support of rigid risers, it could be easily adapted to also support flexible risers, and the present invention is also adaptable to any device of the pipe support type.

Unlike the original concept of the MFBM-type pipe support device, here the premise was adopted that the rigid riser support mechanism is an integral part of the upper cone, thus eliminating the need to install slips by shallow diving and avoiding also ensure that the locking mechanism is an integral part of the Top Termination of the Riser (TTR). Another important point is that there is a minimum number of moving parts, which favors the maintainability of the system. In addition, should maintenance be required, the size and weight of the components are compatible with diving operations.

For pull-in operations, it is expected that the slips will return to their working position only by the action of the force of gravity. In addition, all mechanism components are compatible with the expected contact force with a pull-in cable.

In the case of pull-out, the concept of automated slip retraction mechanism was developed. The foundation of this concept lies in the mechanism bars that interconnect all the slips of the upper cone, making the assembled mechanism have only one degree of freedom: the joint retraction of all the slips. It should be emphasized that there is no impediment for this automated retraction mechanism to be used in pull-in operations as well.

It should further be emphasized that the automated retraction mechanism of the slips can be used as an alternative option to the effect of gravity. If any effect is identified that casts doubt on the already-presented functional description (e.g., corrosion or growth of marine life), the mechanism can be adopted as a guarantee that the slips will move to the desired positions - retraction and extension - during the pull-in operation.

A new Top Termination of the Riser (TTR) geometry is also proposed, aiming at its simplification, in which, in addition to considering the locking mechanism as an integral part of the upper cone of the pipe support type device, there is the elimination of moving components for stabilizing its side movement (a function previously performed by the locking ring or the gap compensator).

### Objectives

The present invention has as purpose to support risers.

The present invention has as objective to eliminate the need of installing slips by shallow diving.

The present invention has as objective to provide a new Top Termination of the Riser (TTR) geometry aiming at its simplification.

The present invention has as objective to prevent the locking mechanism from being an integral part of the TTR.

The present invention has as objective to reduce the number of moving parts to favor the maintainability of the system.

The present invention has as objective to ensure that the size and weight of the components are compatible with diving operations.

These and other objectives, such as flexible riser support, will be achieved by the object of the present invention.

### Brief Description of the Drawings

The present invention will be described in more detail below, with reference to the attached figures which, in a schematic way and not limiting the inventive scope, represent examples of the same. In the drawings, there are:

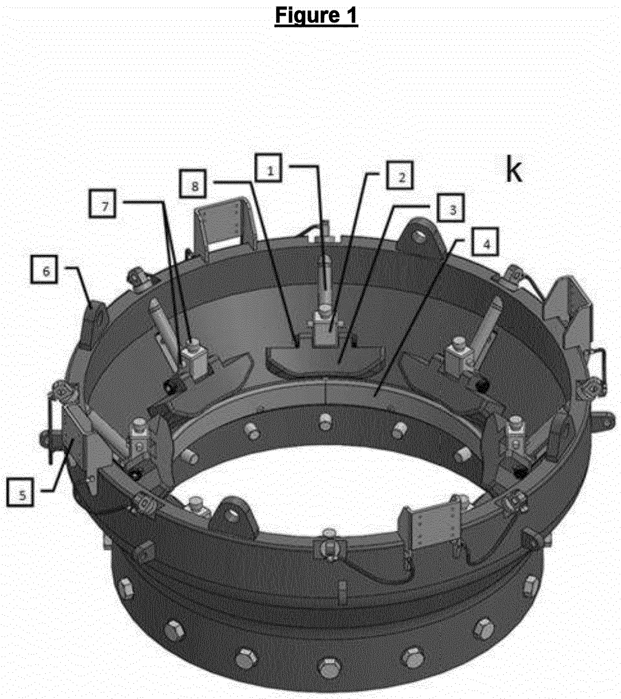

- Figure 1 illustrating an overview of the upper cone and rigid riser support components;
- Figure 2 illustrating the section view of the upper cone;
- Figure 3 illustrating the detail of the slip groove, used as a secondary guide;

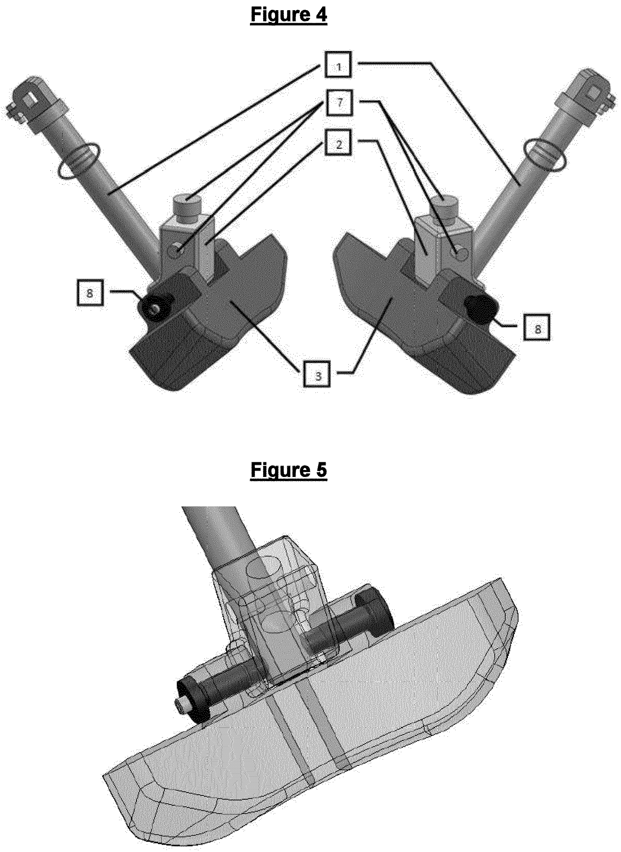

- Figure 4 illustrating the axle (1), fork (2) and slip (3) assembly and detail of the chamfer on the axle;
- Figure 5 illustrating the detail of the union pin for the coupling between the axle, fork and slip;

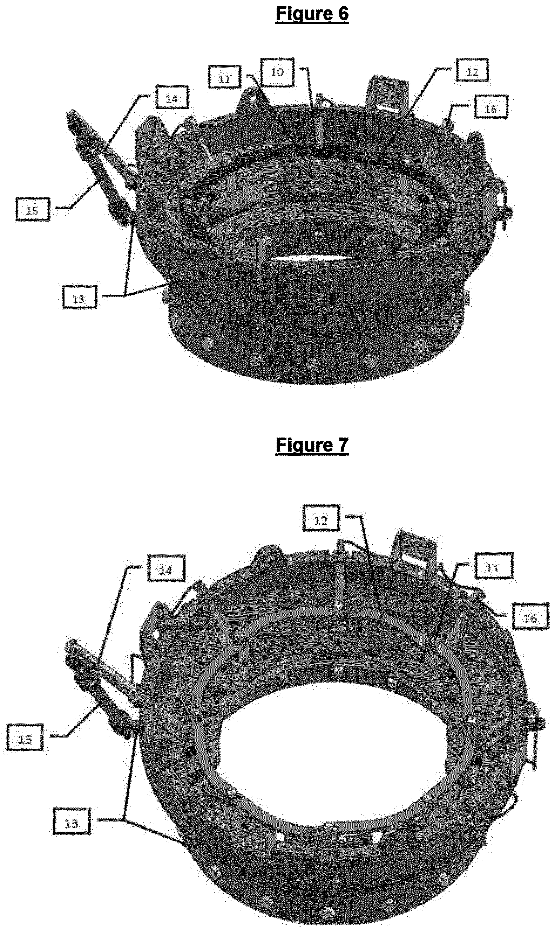

- Figure 6 illustrating the automated retraction mechanism of the slips;
- Figure 7 illustrating the automated retraction mechanism of the slips;
- Figure 8 illustrating the geometry of the TTR;
- Figure 9 illustrating the TTR geometry adapted to support flexible risers;

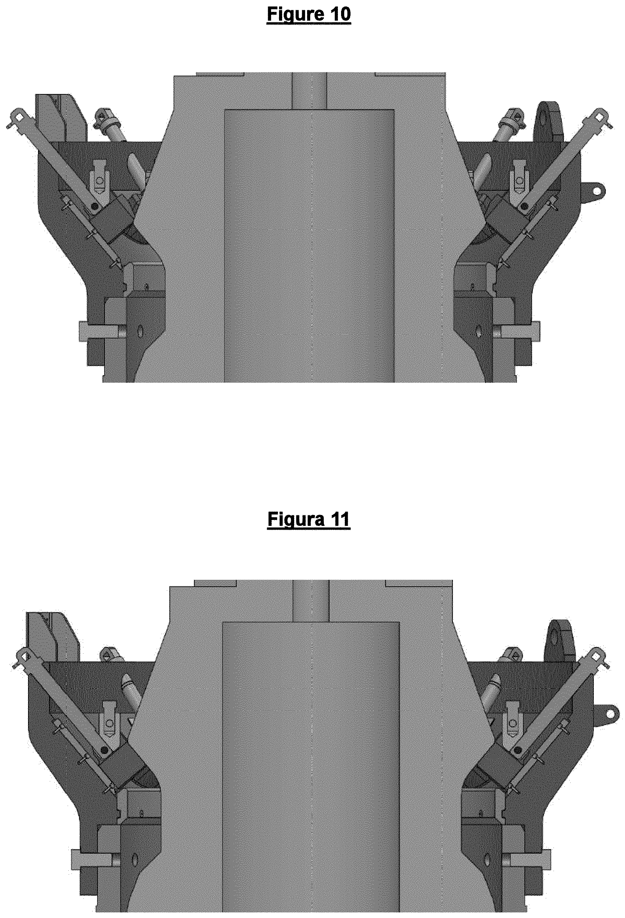

- Figure 10 illustrating the beginning of the upward movement of the slip/fork/axle assemblies;
- Figure 11 illustrating the end of the downward movement of the slip/fork/axle assembly;

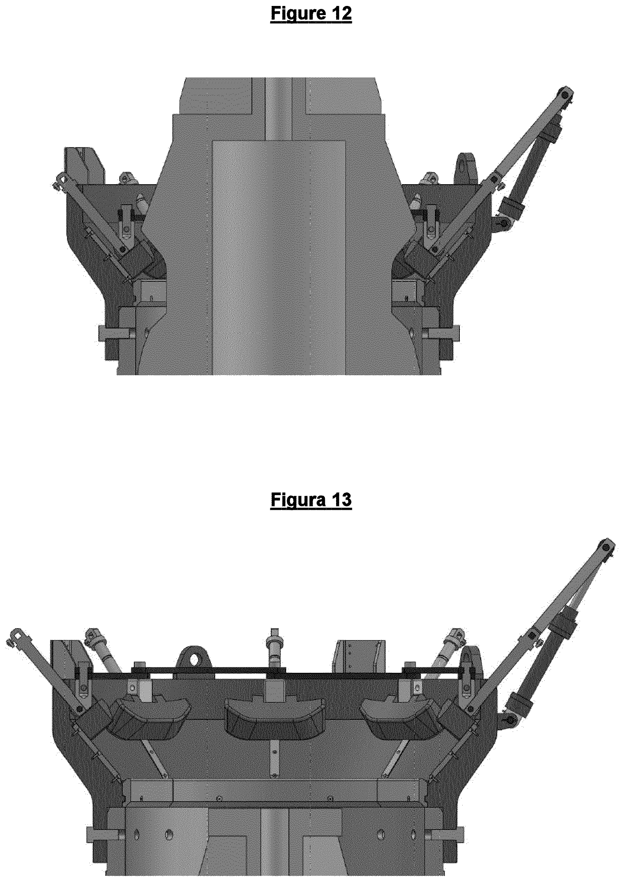

- Figure 12 illustrating the TTR after being pulled, losing contact with the slips;
- Figure 13 illustrating the total retraction of the slips and consequent removal of the TTR;

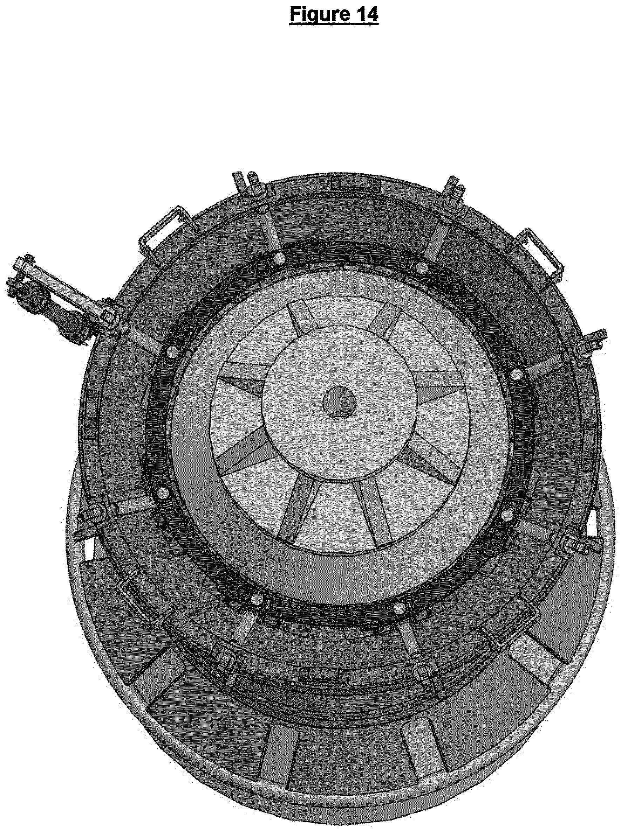

- Figure 14 illustrating the automated retraction mechanism of the slips.

### Detailed Description of the Invention

The rigid riser support has the following components:
- Axle (1);
- Fork (2);
- Slip (3);
- Wear bushing (4);
- Support for camera (5);
- Cone eyelet (6);
- Antifouling pins (7);
- Union pin (8);
- Rail (9);
- Pin for retraction bar (10);
- Clamp (11);
- Alternatively, there may be a slip retraction mechanism bar (12), axle extender (14) and slip retraction tool (15) installed for the pull-out step (or, if necessary, for the pull-in);
- Eyelet for slip retraction mechanism tool (13);
- Backup eyelet for slip retraction (16).

The axle (1) is the component with the primary guide function for the retraction and extension of the slips (3) during pull-in/pull-out operations. Upon observing its geometry, it is noted that its thickest part defines its end-of-stroke position. An eyelet (16) was added in this thicker region to serve as a pulling point for retracting the slips (3). The axle has a groove, easily seen by cameras installed on the support (5) or ROV, which indicates sufficient retraction of the slip (3) to release the TTR (L) in a pull-out operation.

The slip (3) is an effective component of tension load support of the rigid riser. During pull-in operations, there is contact between the pull-in cable and the slips (3), which retract without resistance. In order to avoid damage to the pull-in cable or to the slip itself (3) in this contact, the surfaces facing the axial direction of the system are rounded/faired.

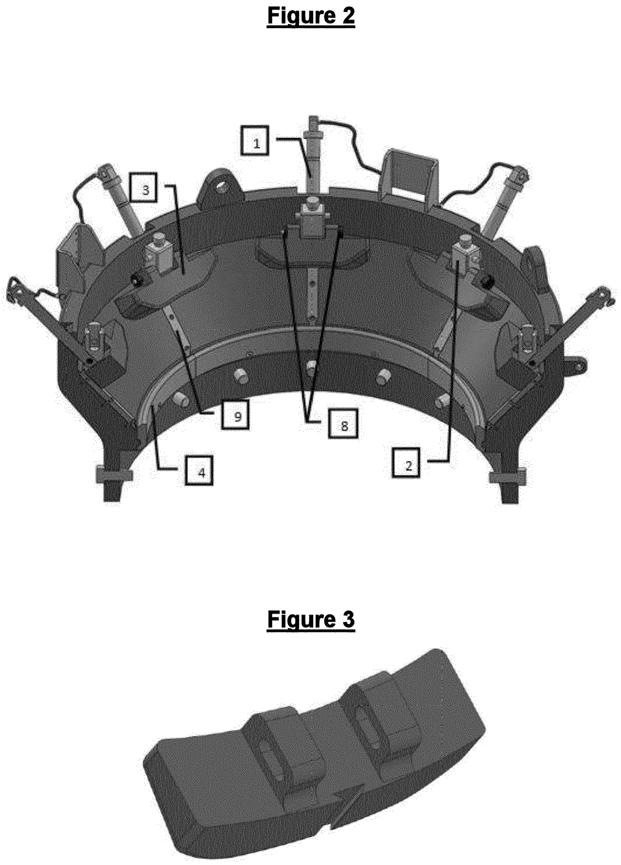

In order that side loads do not occur, the rail (9) serves as a secondary guide during the contact with the pull-in cable, as it acts together with the slip groove (Figure 3) as a reaction surface for side loads, avoiding axle (1) warping and consequent locking of the system.

The fork (2), an item necessary only for installing the retraction tool, is located between the axle (1) and the slip (3) and has a hole for installing the retraction tool (10 and 12) (pin and bar) for joint retraction of the slips (3).

The union pin (8) is the component responsible for the coupling between the axle (1), the slip (3) and the fork (2).

The cone eyelet (6) is the component used to lift the upper cone (k).

The antifouling pins (7) are the components used to protect against incrustation of the holes in the fork where the retraction tool pins (10) and the respective clamps (11) will enter.

The wear bushing (4) is the component responsible for mitigating wear on the upper cone (k). During the installation of the rigid riser, the pull-in cable will come into contact with the upper cone (k), which could cause damage to the upper cone (k). The wear bushing (4) is a component whose geometry presents itself as a preferential point of contact with the pull-in cable, and its wear is foreseen in the design and does not impact the structural strength and the functioning of the mechanisms.

The backup eyelet for slip retraction (16) is the axle eyelet (1) that can be used for its movement in case of failure of the main unlocking system, and the slip retraction tool (15) is coupled to the slip retraction mechanism eyelet (13), which, in turn, is connected to the axle extender (14).

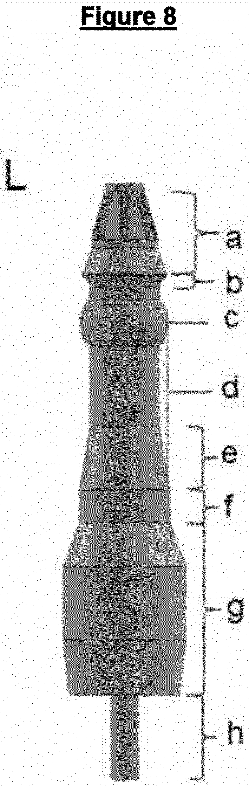

Aiming at simplification, a new geometry was developed for the TTR (L), as can be seen in Figure 8, which, in addition to considering the locking mechanism as an integral part of the upper cone of the pipe support (k), there is the elimination of moving components to stabilize its side movement. The new configuration consists of the following regions:
- Riser pre-alignment profile (a);
- Slip support region (b);
- Spherical geometry (c) for initial TTR entry (L);
- Hourglass shape (d) for minimization of pull-in forces;
- Tapered surface for gap suppression & final alignment (e);
- Cylindrical surface (f) for transmission of shear force to the pipe support;
- Rigidity transition device between the riser and the TTR (L), such as a Flexjoint (illustrative example in the figure), Stressjoint, etc. (g);
- Riser extension connected to Flexjoint (h).

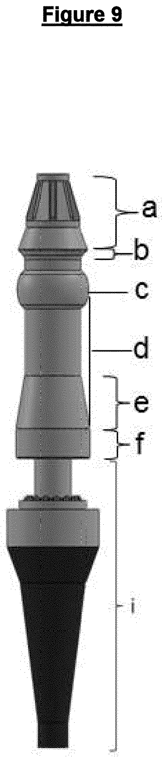

The regions described above describe the TTR (L) solution for rigid riser support. The TTR (L) can be easily adapted to support flexible risers by replacing components (g) and (h) with a curvature stiffener (i), a component typically used to provide protection for flexible risers, as can be seen in figure 9.

The riser pre-alignment profile (a) is the transition region between the small diameter of the TTR flange (L) connected to the tension head for riser pull-in and the slips support region (b), being necessary to carry out a smooth pre-alignment of the riser in the pipe support, eliminating the risk of overloads in the pull-in system.

The slips support region (b) contains the surface that effectively supports the tension load of the riser, presenting the angle compatible with the slips (3) of the upper cone (k). The fundamental premise is that, whatever the demand coming from the riser is, the contact pressure between the TTR (L) and the slips (3) of the upper cone (k) can even be slowed down, but not suppressed to the point that the contact between the top termination of the riser (L) and its support system is ceased.

The spherical geometry (c) for the entry of the TTR (L), although the first contact region of the TTR (L) with the pipe support is precisely the edge of the slips support region (b), has a larger diameter, thus being the main surface of initial contact between the top termination of the riser (L) and the support. As it is spherical, whatever the installation misalignment, the contact condition of the TTR (L) with the pipe support is quite homogeneous, thus acting as a "ball joint" for the initial entry of the riser.

The hourglass-shaped region (d) allows a misaligned insertion of the TTR (L) in almost its entire length, allowing the spherical region (c) to effectively act as a ball joint, thus avoiding the appearance of large resistive forces to the pull-in operation. It is located below the spherical region (c), where there is a portion of the TTR (L) with a diameter significantly smaller than the internal diameter of the pipe support.

After the almost complete entry of the TTR (L) into the pipe support, the gap provided by the hourglass-shaped region (d) needs to be suppressed in this region called the Conical Surface for Gap Suppression (e), to align the support region of the TTR (L) with the support slips (3) of the upper cone (k) and promote the effective alignment between the TTR (L) and the pipe support.

The cylindrical surface for transmitting the shear force (f) is the last element of the TTR (L) to come into contact with the pipe support, thus ending the pull-in operation. As the spherical geometry (c) and the cylindrical surface (f) present a tight tolerance in relation to the internal diameter of the pipe support, the combination of such manufacturing requirements establishes a high self-alignment capacity of the TTR (L). A great advantage of the tight tolerance of this cylindrical surface is the elimination of the need of including a movable component for suppressing the gap and for transmitting the shear force coming from the riser.

It should be noted that, although the present invention has been described in relation to the attached drawings, it may undergo modifications and adaptations by technicians skilled on the subject, depending on the specific situation, but provided that it is within the inventive scope as defined by the appended claims.

## Claims

1. A support for risers, that comprises:
- a riser interconnection component in at least one pipe support with a rigid riser support mechanism as an integral part of an upper cone (k); and
- a geometrically modified Top Termination of the Riser (TTR) minimizing the number of moving components.
wherein the upper cone (k) of the pipe support comprises:
- an axle (1) which is configured as the primary guide for the retraction and extension of a slip (3),
- a fork (2) located between the axle (1) and the slip (3), wherein the fork (2) has a hole for installing a retraction tool, where the retraction tool comprises a pin (10) and a slip retraction mechanism bar (12),
- a wear bushing (4) that is the preferred point of contact with a pull-in cable and which mitigates wear on the upper cone (k),
- a support for camera (5), wherein the camera is configured to see the axle (1),
- a cone eyelet (6) used to lift the upper cone (k),
- antifouling pins (7) configured to protect against the incrustation of the hole of the fork where the retraction tool pins (10) and respective clamps (11) may enter,
- a union pin (8) for coupling the axle (1), the slip (3) and the fork (2),
- a rail (9),
- an eyelet (13) configured to receive a slip retraction mechanism tool (15),
- a backup eyelet for slip retraction (16), said backup eyelet configured to serve as a pulling point for retracting the slips (3),. and,
wherein the Top Termination of the Riser (TTR) comprises:
- a riser pre-alignment profile (a) that is the transition region between the small diameter of the Top Termination of the Riser (TTR) and a slips support region (b),
- a spherical geometry region (c) for initial Top Termination of the Riser (TTR) entry,
- a hourglass-shaped region (d) for minimization of pull-in forces,
- a conical surface for gap suppression & final alignment (e),
- a cylindrical surface (f) for transmission of shear force to the pipe support, and
- a stiffness transition device (g) between the riser extension and the Top Termination of the Riser (TTR).

2. The support according to claim 1, wherein said support comprises a curvature stiffener (i)to replace the components (g) and the riser extension (h) in order to support a flexible riser.

3. The support according to claim 1, wherein the axle (1) comprises a groove indicating sufficient retraction of the slip (3).

4. The support according to claim 1, wherein said support comprises the slip retraction mechanism bar (12), an axle extender (14) and the slip retraction mechanism tool (15).

5. The support according to claim 1, wherein the slip (3) is rounded/faired on the surface that comes into contact with the pull-in cable.

6. The support according to claim 1, wherein the riser pre-alignment profile (a) is configured to eliminate the risk of overloads in the pull-in system and smoothly aligns the riser in the pipe support.

7. The support according to claim 1, wherein the slips support region (b) comprises the surface that effectively supports the tension load of the riser, presenting the angle compatible with the slip (3) of the upper cone (k).

8. The support according to claim 1, wherein the spherical geometry (c) for the entry of the TTR (L) presents a spherical geometry, a diameter greater than the slip support edge (b) and is the main surface of initial contact between the top termination of the riser (TTR) and the support.

9. The support according to claim 1, wherein the spherical geometry (c) for the entry of the TTR (L) eventually acts as a ball joint for the initial entry of the riser (L).

10. The support according to claim 1, wherein the hourglass-shaped region (d) is located below the spherical region (c) and allows misaligned insertion of the TTR (L).

11. The support according to claim 1, wherein the conical surface for gap suppression (e) suppresses the gap provided by the hourglass-shaped region (d) after the entry of the TTR (L) in the pipe support and aligns the TTR (L) with the pipe support.

12. The support according to claim 1, wherein the cylindrical surface for transmission of shear force (f) is located below the conical surface for gap suppression (e) and is the last element to come into contact with the pipe support.

## Patentansprüche

1. Träger für Steigrohre, umfassend:
- ein Steigrohr-Verbindungselement in mindestens einer Rohrstütze mit einem starren Steigrohr-Haltemechanismus als integraler Bestandteil eines oberen Konus (k); und
- einen geometrisch modifizierten oberen Steigrohrabschluss (TTR), der die Anzahl der beweglichen Komponenten minimiert,
wobei der obere Konus (k) der Rohrstütze Folgendes umfasst:
- eine Achse (1), die als Hauptführung für das Zurückziehen und Ausfahren eines Slips (3) ausgebildet ist,
- eine Gabel (2), die zwischen der Achse (1) und dem Slip (3) angeordnet ist, wobei die Gabel (2) eine Öffnung zur Aufnahme eines Zurückziehwerkzeugs aufweist, wobei das Zurückziehwerkzeug einen Stift (10) und eine Slip-Zurückziehstange (12) umfasst,
- eine Verschleißbuchse (4), die als bevorzugte Kontaktstelle mit einem Einziehseil dient und den Verschleiß am oberen Konus (k) mindert,
- eine Kamerahalterung (5), wobei die Kamera so ausgelegt ist, dass sie die Achse (1) erfasst,
- eine Konusöse (6) zum Anheben des oberen Konus (k),
- Antifouling-Stifte (7) zum Schutz vor Verkrustungen in der Öffnung der Gabel, in die die Stifte (10) des Zurückziehwerkzeugs und die entsprechenden Klemmen (11) eingreifen können,
- einen Verbindungsstift (8) zum Verbinden der Achse (1), des Slips (3) und der Gabel (2),
- eine Schiene (9),
- eine Öse (13), die zur Aufnahme eines Werkzeugs (15) für den Slip-Zurückziehmechanismus ausgelegt ist,
- eine Sicherungsöse (16) zum Zurückziehen der Slips, wobei die genannte Sicherungsöse als Zugpunkt zum Zurückziehen der Slips (3) dient,
und wobei der obere Steigrohrabschluss (TTR) Folgendes umfasst:
- ein Steigrohr-Vorausrichtungsprofil (a), das den Übergangsbereich zwischen dem kleinen Durchmesser des oberen Steigrohrabschlusses (TTR) und einem Slip-Auflagebereich (b) bildet,
- einen Bereich mit sphärischer Geometrie (c) für das anfängliche Einführen des oberen Steigrohrabschlusses (TTR),
- einen sanduhrförmigen Bereich (d) zur Minimierung der Einzugskräfte,
- eine konische Fläche zur Spaltbeseitigung und endgültigen Ausrichtung (e),
- eine zylindrische Fläche (f) zur Übertragung der Scherkräfte auf die Rohrstütze, und
- eine Steifigkeitsübergangsvorrichtung (g) zwischen der Steigrohrverlängerung und dem oberen Steigrohrabschluss (TTR).

2. Der Träger nach Anspruch 1, wobei der genannte Träger eine Krümmungsversteifung (i) zum Ersetzen der Komponenten (g) und der Steigrohrverlängerung (h) zur Abstützung eines flexiblen Steigrohrs umfasst.

3. Der Träger nach Anspruch 1, wobei die Achse (1) eine Nut aufweist, die das ausreichende Zurückziehen des Slips (3) anzeigt.

4. Der Träger nach Anspruch 1, wobei der genannte Träger die Slip-Zurückziehstange (12), eine Achsverlängerung (14) und das Werkzeug (15) für den Slip-Zurückziehmechanismus umfasst.

5. Der Träger nach Anspruch 1, wobei der Slip (3) an der Oberfläche, die mit dem Einziehseil in Kontakt kommt, abgerundet/geglättet ist.

6. Der Träger nach Anspruch 1, wobei das Steigrohr-Vorausrichtungsprofil (a) so ausgebildet ist, dass kein Überlastungsrisiko im Einziehsystem besteht und das Steigrohr reibungslos in der Rohrstütze ausgerichtet wird.

7. Der Träger nach Anspruch 1, wobei der Slip-Auflagebereich (b) die Fläche umfasst, die die Zugbelastung des Steigrohrs wirksam aufnimmt und den mit dem Slip (3) des oberen Konus kompatiblen Winkel aufweist.

8. Der Träger nach Anspruch 1, wobei die sphärische Geometrie (c) zum Einführen des TTR (L) eine sphärische Geometrie und einen größeren Durchmesser als die Slip-Auflagekante (b) aufweist und die Hauptfläche für den ersten Kontakt zwischen dem oberen Steigrohrabschluss (TTR) und dem Träger darstellt.

9. Der Träger nach Anspruch 1, wobei die sphärische Geometrie (c) zum Einführen des TTR (L) letztlich als Kugelgelenk für das anfängliche Einführen des Steigrohrs (L) fungiert.

10. Der Träger nach Anspruch 1, wobei der sanduhrförmige Bereich (d) unterhalb des sphärischen Bereichs (c) liegt und das Einführen des TTR (L) in nicht ausgerichteter Stellung ermöglicht.

11. Der Träger nach Anspruch 1, wobei die konische Fläche zur Spaltbeseitigung (e) den durch den sanduhrförmigen Bereich (d) verursachten Spalt nach dem Einführen des TTR (L) in die Rohrstütze schließt und den TTR (L) an der Rohrstütze ausrichtet.

12. Der Träger nach Anspruch 1, wobei die zylindrische Fläche zur Übertragung der Scherkräfte (f) unterhalb der konischen Fläche zur Spaltbeseitigung (e) liegt und als letztes Element mit der Rohrstütze in Kontakt kommt.

## Revendications

1. Support pour colonnes montantes, comprenant :
- un composant d'interconnexion de colonne montante dans au moins un support de conduite comportant un mécanisme de support de colonne montante rigide faisant partie intégrante d'un cône supérieur (k) ; et
- une terminaison supérieure de colonne montante (TTR) géométriquement modifiée réduisant au minimum le nombre de composants mobiles,
dans lequel le cône supérieur (k) du support de conduite comprend :
- un axe (1) qui est configuré comme guide principal pour la rétraction et l'extension d'un coin (3),
- une fourche (2) située entre l'axe (1) et le coin (3), dans lequel la fourche (2) comporte un trou destiné à l'installation d'un outil de rétraction, l'outil de rétraction comprenant une broche (10) et une barre de mécanisme de rétraction de coin (12),
- une bague d'usure (4) qui constitue le point de contact privilégié avec un câble de halage et qui atténue l'usure du cône supérieur (k),
- un support de caméra (5), dans lequel la caméra est configurée pour observer l'axe (1),
- un œillet de cône (6) utilisé pour soulever le cône supérieur (k),
- des broches antisalissure (7) configurées pour protéger contre l'encrassement du trou de la fourche dans lequel les broches (10) de l'outil de rétraction et les colliers (11) respectifs peuvent pénétrer,
- une broche d'assemblage (8) destinée à accoupler l'axe (1), le coin (3) et la fourche (2),
- un rail (9),
- un œillet (13) configuré pour recevoir un outil de mécanisme de rétraction de coin (15),
- un œillet de secours pour la rétraction du coin (16), ledit œillet de secours étant configuré pour servir de point de traction pour rétracter les coins (3),
et dans lequel la terminaison supérieure de colonne montante (TTR) comprend :
- un profil de préalignement de colonne montante (a) qui constitue la région de transition entre le petit diamètre de la terminaison supérieure de colonne montante (TTR) et une région de support des coins (b),
- une région à géométrie sphérique (c) destinée à l'entrée initiale de la terminaison supérieure de colonne montante (TTR),
- une région en forme de sablier (d) destinée à réduire au minimum les efforts de halage,
- une surface conique destinée à la suppression du jeu et à l'alignement final (e),
- une surface cylindrique (f) destinée à transmettre l'effort de cisaillement au support de conduite, et
- un dispositif de transition de rigidité (g) entre l'extension de colonne montante et la terminaison supérieure de colonne montante (TTR).

2. Support selon la revendication 1, dans lequel ledit support comprend un raidisseur de courbure (i) destiné à remplacer les composants (g) et l'extension de colonne montante (h) afin de supporter une colonne montante flexible.

3. Support selon la revendication 1, dans lequel l'axe (1) comprend une rainure indiquant une rétraction suffisante du coin (3).

4. Support selon la revendication 1, dans lequel ledit support comprend la barre de mécanisme de rétraction de coin (12), une rallonge d'axe (14) et l'outil de mécanisme de rétraction de coin (15).

5. Support selon la revendication 1, dans lequel le coin (3) est arrondi/profilé sur la surface qui entre en contact avec le câble de halage.

6. Support selon la revendication 1, dans lequel le profil de préalignement de colonne montante (a) est configuré pour éliminer le risque de surcharges dans le système de halage et aligner progressivement la colonne montante dans le support de conduite.

7. Support selon la revendication 1, dans lequel la région de support des coins (b) comprend la surface qui supporte effectivement la charge de traction de la colonne montante, présentant un angle compatible avec le coin (3) du cône supérieur.

8. Support selon la revendication 1, dans lequel la géométrie sphérique (c) destinée à l'entrée de la TTR (L) présente une géométrie sphérique et un diamètre supérieur à celui du bord de support des coins (b), et constitue la principale surface de contact initial entre la terminaison supérieure de colonne montante (TTR) et le support.

9. Support selon la revendication 1, dans lequel la géométrie sphérique (c) destinée à l'entrée de la TTR (L) agit finalement comme une rotule lors de l'entrée initiale de la colonne montante (L).

10. Support selon la revendication 1, dans lequel la région en forme de sablier (d) est située au-dessous de la région sphérique (c) et permet une insertion désalignée de la TTR (L).

11. Support selon la revendication 1, dans lequel la surface conique destinée à la suppression du jeu (e) supprime le jeu ménagé par la région en forme de sablier (d) après l'entrée de la TTR (L) dans le support de conduite et aligne la TTR (L) sur le support de conduite.

12. Support selon la revendication 1, dans lequel la surface cylindrique destinée à transmettre l'effort de cisaillement (f) est située au-dessous de la surface conique destinée à la suppression du jeu (e) et constitue le dernier élément à entrer en contact avec le support de conduite.
